# EUROPEAN PATENT SPECIFICATION

(11) **EP 3 115 200 B1**
(45) Date of publication and mention of the grant of the patent: **28.09.2022**
(21) Application number: 16178757.7
(22) Date of filing: 09.07.2016
(51) Int. Cl.: B32B 18/00, C04B 35/80, F01D 5/18, F01D 5/28, C04B 38/00, C04B 37/00, F01D 9/06, F01D 5/14

(54) **MANUFACTURING OF MULTIPLE COOLING PANELS**
HERSTELLUNG VON MEHREREN ABKÜHLUNGSPANEELEN
FABRICATION DE PANNEAUX DE REFROIDISSEMENT MULTIPLES

(30) Priority: 10.07.2015 EP 15176309
(43) Date of publication of application: 11.01.2017
(73) Proprietor: Ansaldo Energia IP UK Limited, London W1G 9DQ (GB)
(72) Inventor: GRASSO, Piero-Daniele, 8166 Niederweningen (CH); STANKOWSKI, Alexander, 5303 Würenlingen (CH); PUIDOKAS, Sabrina, 5408 Ennetbaden (CH)
(74) Representative: Bernotti, Andrea

(56) References cited:
- EP-A2- 1 880 984
- WO-A1-2016/157127
- DE-A1-102013 110 381
- US-A1- 2003 022 783
- US-A1- 2003 207 155
- US-A1- 2004 221 941
- US-A1- 2005 118 392

## Description

### Technical Field

The present invention relates to advanced concepts for modular Industrial Gas Turbine (IGT) components, which basing on the principle of using best-suited materials for individual sections in every area of IGT components according to the state of the art. It refers to methods for manufacturing of isolation structures resp. panels, cooling structures resp. panels for applying on a component to adapt the final component to a specific function.

Furthermore the present invention relates to i) combined panel structures; ii) special treatment of the various panels which form the combined panel structure; iii) manufacturing concept referring to a structured cooling panel; iv) various IGT components which are assembled by the combined panel structures.

Moreover, the present invention relates to a modular structure assembly and a CMC airfoil fixation on metallic platform with metallic core of the above-mentioned structured IGT components, especially referring to a guide vane or rotor blade airfoil.

### Background of the invention

The selection of most adequate material being actively connected to environmental, thermal, mechanical and thermo-mechanical load conditions under service exposure. According to this design concept, monolithic ceramic and ceramic matrix composite (CMC) materials are especially beneficial to be applied in high temperature loaded areas, whereas metal alloys are preferentially used mainly in mechanically or moderate thermo-mechanically loaded sections. This principle implicates the utilization of monolithic ceramics and especially CMCs for the generation of GT components or component modules/specific areas in the Turbine & Combustor GT section such as platforms and airfoils, inserts or more generally as liner material.

The approach is also an extension of the new reconditioning/repair concept referring to WO 2014/146829 A1, adapted to higher T applications. As a matter of fact, monolithic ceramic materials and ceramic matrix composites are less prone to thermal degradation effects when exposed to high and very high temperatures (1000-1700°) and cyclic operation regimes. Compared to the use of metallic alloys, which must be protected by an environmental metallic coating combined with a thermal barrier coating (i.e., TBC system), a considerably longer overall component lifetime is enabled. Ceramic systems (incl. CMCs) might also need environmental and thermal barrier protection coatings made of ceramics, especially in the higher temperature range, but thus allowing operation at temperature levels that metallic alloys cannot sustain or considerably increasing the component lifetime.

Based on this concept, there are mainly two factors, driving the development of monolithic and ceramic composite made bodies for the Turbine Blading and Combustor sections of land based IGT and, however, this is also valid, at least in part, for the aero GTs:
1. Component T resistance and increased lifetime.
2. The cooling requirements for the front stages of Turbine blading can be substantially reduced by providing the blading (rotating and/or stationary) with a ceramic shell as a protective barrier against the impact of the hot gas during operation.

Typical drawbacks of today's standard monolithic ceramic and CMC systems in modular IGT component designs:
i. Brittle behaviour and low fracture toughness (monolithic ceramic).
ii. Very limited fatigue behaviour, especially monolithic ceramic, but also CMC systems.
iii. Limit creep resistance (CMC).
iv. Cost intensive (CMC).

Commercially available, as well as in literature described CMC material still suffers from:
Mechanical strength values of CMCs, which are generally at the limit of the design requirements, when considering turbine parts and especially in case of rotating blading (creep loading). Considering a simple functional split (i.e., mechanical and thermal decoupling) of the different component sections, such as, splitting the component into different subcomponents, where certain areas have mainly to sustain the mechanical load and other component sections will have to resist to a high thermal loading (as mentioned in several patents and open literature) is not sufficient. Some specific areas of the shell are in charge of very high temperatures and to non-negligible mechanical loading from the very high gas mass flow, gas pressure and centrifugal load.

Strong anisotropic mechanical and physical CMC material properties. This phenomenon is based on the intrinsic 2D/3D woven microstructure of inorganic fibres within the CMC composite. Especially in the case of a need for thicker material strengths, multiple layer arrangements are unavoidable, additionally increasing the intrinsic inhomogeneity and leading to the risk of local defects or complete delamination in between the individual stacked layers. Additionally to this aspect, the overall risk of increasing porosity raises with the number of layers, which are used to form the final shell or liner section.

Limited creep behaviour, which is mainly driven by the fibre properties contained as reinforcement elements within the CMC microstructure. This peculiarity of ceramic composite material limits even further the design flexibility and subsequent application in areas of combined mechanical and high temperature loading over long operation times.

High thermal gradients (temperature inhomogeneity) around the airfoil are to be expected. Out to the fact that the resulting maximum thermal and mechanical loading can be very localized, this bears a high risk of local damage formation, which might ultimately lead to a complete failure of the CMC system

US 2005/118392 A1 describes a CMC structure for a gas turbine engine component, having cooling channels. US 2005/118392 A1 also discloses its manufacturing process comprising the steps of cutting at least one ply of ceramic cloth; stitching at least one fugitive thread through said at least one ply of ceramic cloth; infiltrating with a ceramic precursor slurry; consolidating; sintering the laminated and infiltrated ceramic fiber material to decompose the at least one fugitive thread so as to leave one channel in the CMC component member.

### Summary of invention

It is an object of the present invention to summarize the limits and shortcomings of today's monolithic ceramic and CMC sections for IGT components, as well as the correlated modular component design scenarios. For this purpose, the following critical aspects have to be overcome:
i. Distinct anisotropy of the mechanical properties of CMC material.
ii. Mechanical, thermal and thermo-mechanical limits of standard monolithic and CMC material.
iii. Limits of erosion for the CMC material.
iv. Impact resistance of standard monolithic and CMC material.
v. Limits of high temperature chemical stability (ceramic corrosion) and oxidation for non-oxide ceramics leading to matrix & fibres properties degradation.
vi. High cost of individual CMC sections (e.g., airfoil shells, liners, and other components).

The inventive object referring to an embodiment according to the independent claim.

The invention is as disclosed in the appended claims.

Furthermore, the object of the present invention concerns a method for assembling a guide vane or a rotor blade of a turbomachine on the basic of a modular structure, wherein at least the airfoil-shells, liners and other components comprising at least one isolation panel prepared by a manufacturing process according to one or more of the attached claims of the present description.

Using the example of a guide vane assembly of a turbomachine on the basis of a modular structure, this guide vane comprises at least one airfoil, an inner platform, an outer platform, wherein the guide vane airfoil and/or platforms have at its one ending provisions for the purpose of a connection of the guide vane elements among each other.

The connections of guide vane elements among each other, especially manufacturing according to one or more of the attached claims of the present description, are configured as a detachable, permanent or semi-permanent fixation with respect to the radial or quasi-radial extension of the airfoil compared to the rotor axis of the turbomachine.

The assembling of the airfoil with respect to at least one platform is based on a force-fit and/or a form-fit connection, or the assembling of the airfoil with respect to at least one platform is based on the use of a metallic and/or ceramic fitting surface, or the assembling of the airfoil with respect to at least one platform is based on force closure means with a detachable, permanent or semi-permanent fixation.

At least the guide vane airfoil or an alternative base structure of the airfoil comprise at least one flow-charged outer hot gas path liner, which encases at least one part of the guide vane airfoil, wherein the flow-charged outer hot gas path liner is connected to the guide vane airfoil or alternative base structure of the airfoil by using a shrinking joint.

Moreover, at least the guide vane airfoil or an alternative base structure of the airfoil comprises at least one flow-charged outer hot gas path liner, which encases at least a part of the guide vane airfoil. The flow-charged outer hot gas path liner is connected with respect to the guide vane airfoil or alternative base structure of the airfoil by using a shrinking joint.

Furthermore, at least the guide vane airfoil or an alternative base structure of the airfoil comprises at least one flow-charged outer hot gas path liner, which encases at least one part of the defined guide vane airfoil, wherein the platforms comprise at least one insert element or mechanical interlock and/or additional thermal barrier coating along thermal stress areas.

Additionally, at least the guide vane airfoil or an alternative base structure of the airfoil comprises at least one flow-charged outer hot gas path liner, which encases at least one part of the defined guide vane airfoil, wherein platforms and/or airfoil and/or airfoil carrier and/or outer hot gas path liner comprise at least one insert element and/or mechanical interlock along or within the thermal stress areas.

The same or similar considerations apply also if it concerns a rotor blade or a liner and associated structures and components.

The method for assembling a guide vane or rotor blade is characterized in that the insert element(s) on the basic of an isolation panel according to one or more of the attached claims of the present description and/or mechanical interlock, forming the respective flow-charged zone, are inserted at least in a force-fitting manner into appropriately designed recesses or in the manner of a push loading drawer with additional fixing means.

As an example of assembling a rotor blade, following procedure is possible: Rotor blade elements comprising at least one rotor blade airfoil, at least one footboard mounting part, whereas rotor blade elements having at its one endings means for the purpose of an interchangeable connection among each other. At least the airfoil is manufactured according one or more of the attached claims of the present description. The connection of the airfoil with respect to other elements based on a fixation in radially or quasi-radially extension compared to the axis of the gas turbine, whereas the assembling of the blade airfoil in connection with the footboard mounting part based on a friction-locked bonding actuated by adherence interconnecting. Alternatively, the assembling of the blade airfoil in connection with the footboard mounting part based on the use of a metallic and/or ceramic surface fixing rotor blade elements to each other. Or the assembling of the blade airfoil in connection with the footboard mounting part based on closure means with a detachable, permanent or semi-permanent fixation, whereas the footboard mounting part consisting of at least two-folded elements. The assembly of separated footboard mounting parts with respect to a foot-side elongated portion of the rotor blade airfoil is conducted with a reciprocal axially guided coupling, whereas the footboard mounting parts (120, 130) having axially opposite cracks or clutches corresponding to the axially extending contour of the elongated portion of the shank under-structure. The axially extending contour of the elongated portion of the shank under structure corresponding approximately to the axially inflow plane of the airfoil.

Additionally, the main target is to decouple thermal and mechanical load referring to a concept of modules and joints in connection with a CMC airfoil, especially referring to a guide vane or rotor blade airfoil.

Fundamentals items for CMC airfoil shell integration to the part based on:
- Flexible fixation of the CMC to the metallic platform, i.e., the airfoil -on the drawing named shell- is enabled to expand both along the X- Y- axis without being constraint;
- Intermediate layer as support of the metallic shell and as "bumper" finction to compensate the thermal expansion mismatch and probable shocks.

Definitions: a panel consists of a single or multi-plies (= multi-layered) structure of tissue fibres with a defined arrangement. Each layer of a multi-plies structure can be made of a different fibre arrangement, orientation, architecture or geometric consistency, for example size.

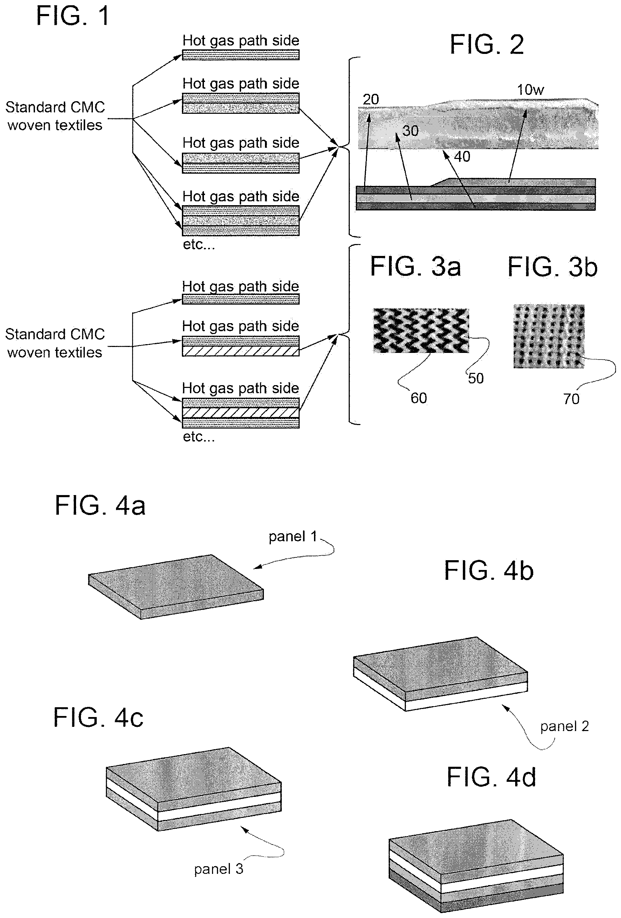

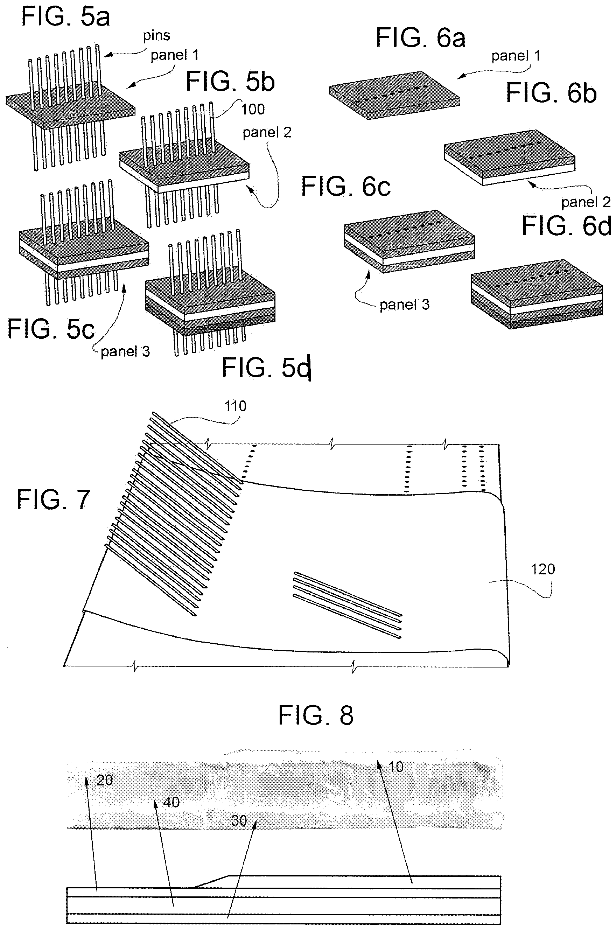

A distinction is imposing:
1. Standard CMC panel using standard arranged and/or woven fibres tissues. Different layers in a multi-layered panel, which do not necessarily have the same fibre orientation or weaving structure (system 1, panel 1, see Figure 1).
2. "Cooling pattern" CMC panel, using combined fibres structures (system 2, panel 2, see Figures 1 and 3a) or using tissues with pre-build cooling holes (system 2, panel 2). This panel comprises a cooling structure, which can consist of different performances (see Figures 3a, 3b, 5b, 11a, 11b).
3. "Isolation CMC panel", consisting of a body with at least the following parts, arranged from top to bottom:
   - Coating, if necessary;
   - CMC (one or more plies);
   - Ceramic felt (impregnated or non-impregnated with ceramic slurry matrix system) (one or more plies);
   - CMC (one or more plies).
      Depending on the needs, a coating can be added by various different processes (thermal spraying, dipping, CVD, etc.) on top of the internal or external surface of the panel [system 3, panel 3, see for example Figures 5c).
      Depending on the needs, the arrangement can be (see Figures 1 and 4):
         i) With isolation panel (panel 3) as external panel on top of standard CMC panel (panel 1)
         ii) With isolation panel (panel 3) as central part of a sandwich, i.e., with standard CMC panels (panel 1) as external and internal panels.
         iii) Etc.
4. Other combinations can be realised depending on the specific application. The layer-up order of the panels can also be different. The combined structure panels used can be combinations of the different panel systems presented above, namely:
   i) Panel 1: CMC, coating , if necessary;
   ii) Panel 2: Cooling pattern CMC;
   iii) Panel 3: Isolation panel, ceramic felt.
   The panels, as single panel or as combined structure panels, can be of complex 3D geometries such a gas turbine rotor blade or vane airfoil.
5. Additionally, implementation of cooling air holes (CAH) using insertion of pins in-between the ceramic tissue fibres bundles avoiding to break/damage of fibres.
   In this case, no need of a complex post processing (such a laser drilling or other machining operations). This can be done in a state of the art CMC panel or in different panel systems and combination thereof.
6. The integration of cooling holes during the manufacturing by using pins. In that manner, the fibres are not getting cut and the integrity of the CMC layers remains unaltered

Moreover, the term (expression) "ceramic textile" is a synonym to "tissue"; the more generic "ceramic fabric" could be used here. The subsequent use of the various terms should be viewed in this context.

The manufacturing steps are using the standard CMC multi-plies production process, in which are integrated some steps or special tissues or items in order to obtain the targeted features.

The advantage of the method is the generation of complex panels (for adaptation of the final product to a specific function) with multiple systems configuration using one single drying and one single sintering step and minimizing (or completely eliminating) the rework steps such as post-machining, surface rework or coating application. The following methods are preferably used as a basis:
Manufacturing concept referring to isolation structures/panels comprising the following operations a)-h):
a) Cutting of a desized 2D ceramic tissue in the right size and shape for the application. Desizing means a process to remove the fibres coating used for manufacturing of the ceramic tissues. b) Slurry infiltration in the tissue by, preferably by knife blade coating (this level open also other slurry infiltration methods) c) Laminating on mould of a single layer or of a multi-layer according to the panel: This method operation comprising at least three steps, namely i) an application of one to n-layers of standard ceramic tissue (with arranged fibres, e.g., un-directionally arranged (UD), or woven fibres); and ii) different layers in the multi-layered panel do not have necessarily to have the same fibre orientation or weaving architecture, and iii) slurry infiltration in the tissue by, e.g., knife blade coating, after each single layer. The three mentioned steps do not necessarily take place in common. d) Laminating on top of multi-layer according to the system 1 (i.e., panel 1) of a single layer or of a multi-layer, according to the system 3 (i.e. panel 3): This method operation comprising at least two steps, namely i) an application of one to n-layers of ceramic felt, and ii) a slurry infiltration in the tissue (only partial: only outer surfaces of the tissue in order to bind it to the CMC multiplies panels, or fully impregnated) by, e.g., knife blade coating, after each single layer. The two mentioned steps do not necessarily take place in common. e) Optional: Pins application (concept with inserted pins) in order to generate straight cooling paths through a part of the thickness or through the full thickness of the multiple panel structure (i.e., cooling air holes, CAH): This method operation comprising at least three steps, namely pins can be i) permanent metallic pins with a ceramic layer coating to avoid attachment of matrix to the pin and too strong oxidation of the pin during sintering; and ii) permanent ceramic pins that can be easily removed after sintering; and iii) pin that will be eliminated during the sintering process via the heat treatment (e.g., carbon pins) leaving the holes structure intact. Additionally, pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. The pins are inserted in-between the tissue fibre bundles in order to avoid any damages of the ceramic fibres during the processing and later removal of the pins. All mentioned steps do not necessarily take place in common. e) Drying. f) De-moulding. g) Sintering the whole structure in one-step in order to finalise the component specific areas or component module. h) Only in case of optional operation e) is made: Remove pins avoiding to damage the fibre bundle surrounding them. Removal technique will depend on the type of pins used [see various steps under e)]. i) Finishing, namely using of i) post-machine, and/or ii) surface smoothening/rework, and/or iii) coating application, and/or other procedures, if necessary.

Elucidating: The knife blade coating is the one used method. This is effectively making more sense to keep infiltration method as general step and mention knife blade coating as an example. Other methods are, e.g., pressure infiltration, pre-processing, electrophoretic deposition, etc.

The initial system applied on the mould must not be mandatorily the system 1. Nevertheless, the initial system can also be system 2 or 3 as described in various figures, wherein the various combinations are described and will depend on the final application or feature targeted.

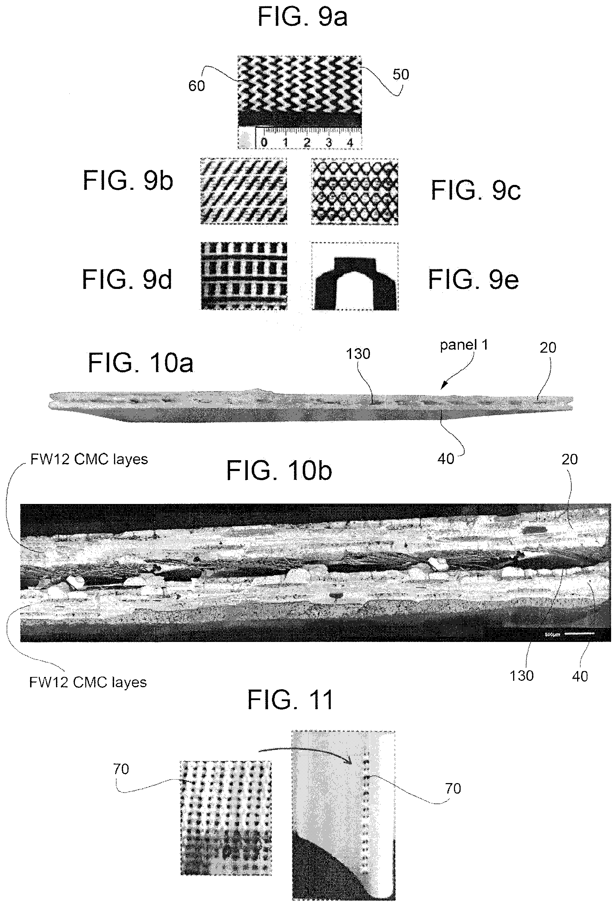

Manufacturing concept referring to cooling structures/panels (Figure 3a) and 3b) and Figure 9, 10 and 11).

Manufacturing concept using tissue with combined fibres architectures (Figures 3a, and 9 and 10) comprising the following operations a)-j):
a) Cutting of a desized 2D ceramic tissue in the right size and shape for the application. Desizing in this context means a process to remove the fibres coating used for manufacturing of the ceramic tissues. b) Slurry infiltration in the tissue by, e.g., knife blade coating. c) Laminating on mould of a single layer or of a multi-layer according to system 2 (i.e., panel 2): This method operation comprising at least three steps, namely i) an application of one to n-layers of combined fibre architecture ceramic tissue (see Figure 3 a) and Figure 9); and ii) different layers in the multi-layered panel do not have necessarily to have the same cooling path architecture; and iii) slurry infiltration in the tissue by, e.g., knife blade coating, after each single layer. The three mentioned steps do not necessarily take place in common. d) Laminating on top of multi-layer system 2 (i.e., panel 1) a single layer or of a multi-layer according to system 1 (i.e., panel 1): This method operation comprising at least three steps, namely i) an application of one to n-layers of standard ceramic tissue (with arranged fibres, e.g., un-directionally arranged (UD), or woven fibres); and ii) different layers in the multi-layered panel do not have necessarily to have the same fibre orientation or weaving architecture; and iii) slurry infiltration in the tissue by, e.g., knife blade coating, after each single layer. The three mentioned steps do not necessarily take place in common. e) Optional: Pins application (see Figure 5) in order to generate straight cooling paths through a part of the thickness or through the full thickness of the multiple panel structure (i.e., cooling air holes, CAH): Pins can be: i) metallic pins with a ceramic layer on top to avoid attachment of matrix to the pin and too strong oxidation of the pin during sintering; ii) permanent ceramic pins, that can be easily removed after sintering; iii) pin that will be eliminated during the sintering process via the heat treatment (e.g., carbon pins) leaving the holes structure intact. Additionally, pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. All mentioned steps do not necessarily take place in common. The pins are inserted in-between the tissue fibre bundles in order to avoid any damages of the ceramic fibres during the processing and later removal of the pins. f) Drying. g) De-moulding. h) Sintering the whole structure in one or more steps step in order to finalise the component specific areas or component module: During the sintering process, the "sacrificial" fibres (i.e., black fibres depicted in Figures 3 a) and Figure 9 will burn out during the sintering process leaving a negative architecture forming the cooling structure. i) Only in case of optional operation 5 is made: Remove pins avoiding to damage the fibre bundle surrounding them. Removal technique will depend on the type of pins used (see various steps under e). j) Finishing, namely using of i) post-machine, and/or ii) surface smoothening/rework, and/or iii) coating application, and/or other procedures.

The initial system applied on the mould must not be mandatorily the system 2. But can also be system 1 or 3 as described in various figures, where the various combinations are described and will depend on the final application or targeted feature.

Manufacturing concept using tissues with combined fibres architectures comprising the following operations a)-j): (Figures 3b, 11)
a) Cutting of a desized 2D ceramic tissue in the right size and shape for the application. Desizing in this context means a process to remove the fibres coating used for manufacturing of the ceramic tissues. b) Slurry infiltration in the tissue by, e.g., knife blade coating. c) Laminating on mould of a single layer or of a multi-layer according to system 2 (i.e., panel 2), comprising at least the followings steps: i) an application of one to n-layers of woven tissues with integrated cooling holes structure (see Figures 3 b); 6; 10); ii) slurry infiltration in the tissue by, e.g., knife blade coating, after each single layer. All mentioned steps do not necessarily take place in common. d) Optional: Laminating on top of multi-layer according to system 2 (i.e., panel 1 and/or 2) a single layer or of a multi-layer according to system 1 (i.e., panel 1) to construct an emergency cooling air holes system. If the system 1 gets damaged, the underneath cooling structure formed using the system 2 will enable an emergency cooling of the damaged area. This method operation comprising at least three steps: i) an application of one to n-layers of standard ceramic tissue (with arranged fibres, e.g., un-directionally arranged (UD), or woven fibres); ii) different layers in the multi-layered panel do not have necessarily to have the same fibre orientation or weaving architecture; iii) slurry infiltration in the tissue by, e.g., knife blade coating, after each single layer. All mentioned steps do not necessarily take place in common; e) optional for areas, where cooling is needed from the start of operation. Pins application (see Figures 3 b); 6; 7; 10) in order to generate straight cooling paths through a part of the thickness or through the full thickness of the multiple panel structure (i.e., cooling air holes, CAH): Pins can be: i) metallic pins with a ceramic layer on top to avoid attachment of matrix to the pin and too strong oxidation of the pin during sintering; ii) permanent ceramic pins, that can be easily removed after sintering; iii) pin that will be eliminated during the sintering process via the heat treatment (e.g., carbon pins) leaving the holes structure intact. Pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. Additionally, the pins are inserted in-between the tissue fibre bundles in order to avoid any damages of the ceramic fibres during the processing and later removal of the pins. f) Drying. g) De-moulding. h) Sintering the whole structure in one-step in order to finalise the component specific areas or component module, namely: During the sintering process, the "sacrificial" fibres (i.e., black fibres depicted in Figures 3 b) and 9) will burn out during the sintering process leaving a negative architecture forming the cooling structure. i) Only in case of optional procedure according to lit. e): Remove pins avoiding to damage the fibre bundle surrounding them. Accordingly, removal technique will depend on the type of pins used (see procedure e). j) Finishing, namely using of i) post-machine, and/or ii) surface smoothening/rework, and/or iii) coating application, and/or other procedures, if needed.

The initial system applied on the mould must not be mandatorily the system 2. Nevertheless, the initial system can also be system 1 or 3 as described in various figures, where the various combinations are described and will depend on the final application or feature targeted.

Referring to intermediate lawyer the following aspects should be highlighted: In this case, two main functions of the intermediate layer are significant:
a) Working as a "bumper", it supports the standard CMC or multiple panel CMC structure in order to minimize the bending forces acting on it. These bending forces can be generated by the stresses induced due to thermal gradients in the structure or from operation transients (e.g., engine starts and stops), or by impacting objects.
b) Working as "compensator/regulator" for the CTE (Coefficient of Thermal Expansion) mismatch between the CMC structure and the underneath metallic structure, limiting in that way the building up of very high stresses in the CMC structure.

In this context, reference to the prior art is made, namely referring to
DE 10 201 3110381 A1 and US 8 267 659 B2 where the features (that could correspond to an intermediate layer) are used as spacer between the support structure (e.g., metallic airfoil core) and the CMC shell.

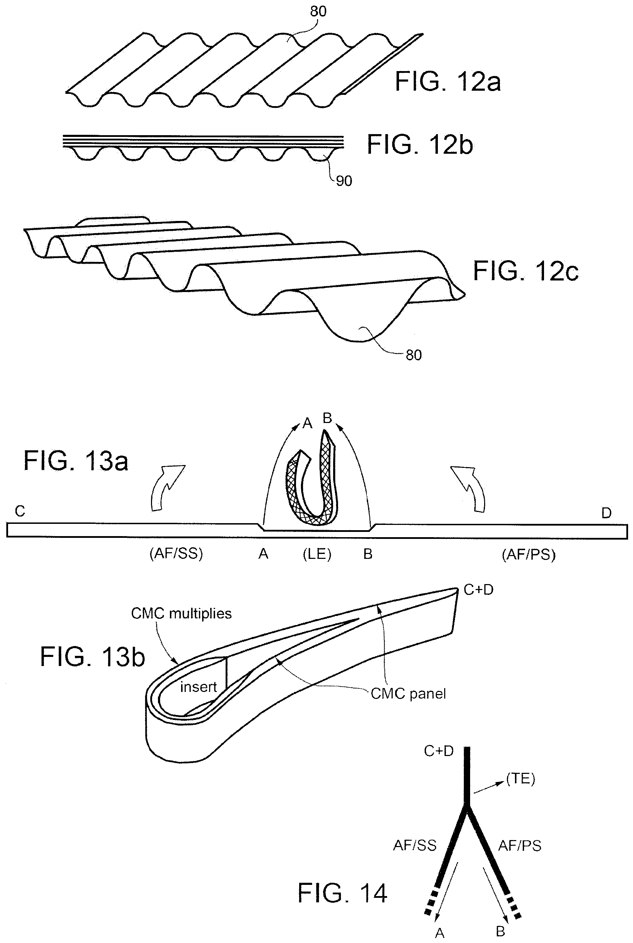

Manufacturing concept referring to an intermediate layer comprising the following operations a)-k):
a) Cutting of a desized 2D ceramic tissue in the right size and shape for the application. Desizing in this context means a process to remove the fibres coating used for manufacturing of the ceramic tissues. b) Slurry infiltration in the tissue by, e.g., knife blade coating. c) Laminating on mould of a single layer or of a multi-layer system 1, 2 or 3. d) Laminating on top of system 1, 2 or 3 a single layer or of a multi-layer system 1, 2 or 3. e) Repeating operations c) and d) until the targeted CMC structure is reached. f) Drying. g) De-moulding. h) Combining an "undulated" structure made of CMC (see Figure 12) to the multiple panel structure obtained from operations a) to e).
a. The "undulated" structure is manufactured separately using the same manufacturing route as the standard CMC tissues and an appropriated mould including the drying and de-moulding steps.
b. The structure is slipped in the internal cavity of the multiple panel structure obtained from operations a) to e).
c. Both structures can be glued using the same ceramic slurry used for the infiltration of the ceramic tissues, or only punctually bound in order to allow a larger lateral movement/expansion of the "undulated" structure.
d. The binding between both structures can also be made by a different joining method, such as a ceramic glue or a brazing technique using metallised surfaces on both ceramic structures.
i) Drying if operation h) lit. c. is carried out. j) Sintering the whole structure in one step in order to finalise the component specific areas or component module. k) Finishing, namely using of i) post-machine, and/or ii) surface smoothening/rework, and/or iii) coating application, and/or other procedures.

Cooling air holes generation using pins can be added to the above manufacturing sequence if needed.

Flexible Manufacturing concept with reinforcement inserts and insert integration: The insert can be an airfoil Leading Edge (LE) area, or a Trailing Edge (TE) area, or other area, including platforms that are strongly solicited from a thermal and mechanical loading point of view.

Pre-impregnated CMC panels (AF/SS & AF/PS = see Figures 13, 14) with the correct 3D airfoil shape with a middle area of non-impregnated tissue (LE) are enveloped around the insert at the LE area and connected at the points C and D (Trailing Edge, TE) (see Figure 13a) by a joining method which can include the addition of a specially prepared tissue to ensure efficient joining of the 2 panels (e.g., interwoven TE tissue to avoid relying on a pure gluing method) (see Figure 14).

Together with an impregnation, a slurry infiltration by various methods (for example combing method) can also be applied.

The final part with insert at the LE and bound area at C+D points is shown in Figure 13b): The mentioned LE insert is an example and it is important to mention that inserts can also be used at TE or other specific areas of the airfoil depending on the component specific thermo-mechanical load. Such a concept can also be used in the case of blades and vanes platform sections or liner components (in the Turbine or in the Combustor Gas Turbine sections).

The following operations are made a)-m):
a) Cutting of a desized 2D ceramic tissue in the right size and shape for the application. Desizing in this context means a process to remove the fibres coating used for manufacturing of the ceramic tissues. b) Slurry infiltration in the tissue by, e.g., knife blade coating in the areas A to C and B to D. c) Laminating on mould of a multi-layer system 1, 2 or 3, wherein LE (Leading edge) area, within the meaning of the above specification, remains thinner taking into account the thickness of the insert. d) Optional: Laminating on top of system 1, 2 or 3 a single layer or of a multi-layer system 1, 2 or 3 in the areas A to C and B to D. e) Repeating operations c) and d) until the targeted CMC structure is reached. f) Drying. g) De-moulding. h) Enveloping the insert, which has been pre-manufactured and therefore it is readily available to be integrated in the envelope for the final manufacturing steps with the pre-prepared panel system as shown in Figure 13:
a. Same ceramic slurry can be used for connecting the insert to the panel system.
b. Other joining method can also be used, such as a ceramic glue or a brazing technique using metallised surfaces on both ceramic structures
c. At the TE, a special woven tissue feature can be integrated in order to ensure a more efficient/through going joining between the AF/SS and the AF/PS CMC panels (see Figure 13).
d. The insert is a made of ceramic with a specific internal structure enabling an efficient cooling of the insert via air passing through the structure. This can be generated using a ceramic foam, but also using a more innovative system such as a lattice structure (i.e., "engineered porosity"). The insert is made in a way that it provides, in addition to the efficient heat exchange feature, a consequent thermal and mechanical resistance to the specific area of the component or component module.
i) Slurry infiltration in the tissue by, e.g., knife blade coating in the LE area (points A to B in Figures 13, 14). j) Drying. k) De-moulding in case a special mould was needed to maintain insert and CMC panels in right position. I) Sintering the whole structure in order to finalise the component specific areas or component module. m) Finishing, namely using of i) post-machine, and/or ii) surface smoothening/rework, and/or iii) coating application, and other arrangements, if needed.

Cooling air holes generation using pins can be added to the above manufacturing sequence if needed.

### Brief description of the drawings

The present invention is going now to be explained more closely by means of different embodiments and with reference to the attached drawings.
- Figure 1: shows various examples of panel arrangements, combination of standard CMC woven tissues with other panel types such as isolation panels (see also Fig.2) or cooling structure/features panels (see also Fig.3);
- Figure 2: shows a typical panel arrangement where an isolation panel is placed in-between two standard CMC panels. Additionally, the optional application of a ceramic coating on the external surface of the panel arrangement is also shown, here in the pictorial connection with Figure 1; for detailed description see Figure 8;
- Figure 3: shows a) an example of a woven ceramic tissue combining different ceramic fibre bundles forming a specific cooling architecture; b) an example of a ceramic tissue with pre-designed/integrated cooling holes features. These tissues are to be used for the formation of cooling structure/feature panels that will be brought in different arrangements with other panel systems as shown in Fig.1;
- Figure 4: shows some examples of panel combinations where, for example in d), 3 different panel systems (standard CMC panel, isolation panel and cooling structure/feature panel) are combined;
- Figure 5: shows same examples of panel combinations as Fig.4 where the next step of insertion of pins to enable the formation of cooling air holes w/o damaging the ceramic fibres of the different tissues has been carried out;
- Figure 6: same examples of panel combinations as Fig.4 in which the pins are removed leaving cooling holes and channels through the multiple layer system;
- Figure 7: shows a practical example of CMC panel with inserted pins;
- Figure 8: shows a structure of a typical panel arrangement where an isolation panel is placed in-between two standard CMC panels according to Figure 2; additionally, the optional application of a ceramic coating on the external surface of the panel arrangement is also shown
- Figure 9: shows various examples of combined fibres architectures, wherein the used fibres are distinctively shown, according to sub-figures a)-e);
- Figure 10A: shows a structure of a compounded panel with cooling channels inbetween CMC skins;
- Figure 10B: shows a magnification of Figure 10A, namely a structure of a compounded panel with cooling channels in-between CMC skins;
- Figure 11: shows a panel structure using tissues with pre-build cooling holes, according to sub-figures a) and b);
- Figure 12: shows an undulated structure of a panel made of CMC, according to sub-figures a)-c); Sub-figure b) shows the undulated structure attached to a standard CMC panel
- Figure 13: shows a flexible manufacturing concept with reinforcement inserts referring to a blade/vane airfoil, according to sub-figures a) and b);
- Figure 14: shows a concept of woven tissues to form a pre-joined Trailing Edge area in order to avoid the CMC at the TE area to rely only on gluing/brazing as joining technology;
- Figures 15-17: show part assemblies including different intermediate layer designs;
- Figures 18-23: show various example of a metallic airfoil solid fixation, namely:

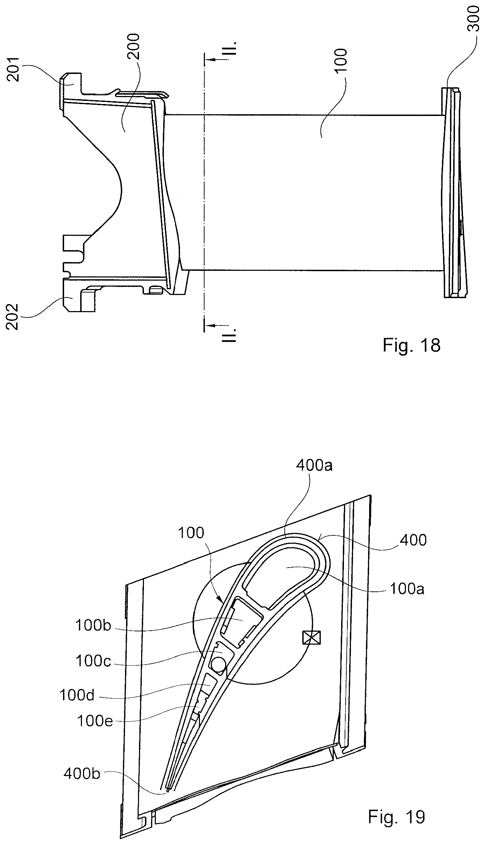

- Figure 18: shows an exemplary guide vane of a gas turbine;
- Figure 19: shows a cross section through the guide vane comprising an additional flow-applied outer hot gas path liner, also called shell module;

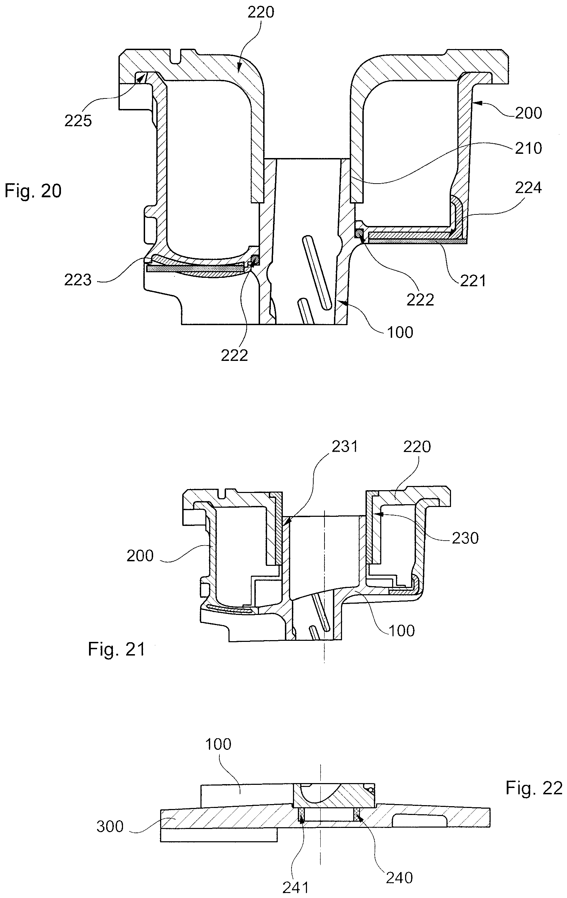

- Figure 20: shows an assembled guide vane in the region of the outer platform, wherein the assembly is made by a brazing and/or frictional connection and/or a mechanical loaded;
- Figure 21: shows an assembled guide vane in the region of the outer platform, wherein the assembly is made by a ceramic bush;
- Figure 22: shows an assembled guide vane in the region of the inner platform, wherein the assembly is made by a ceramic bush;

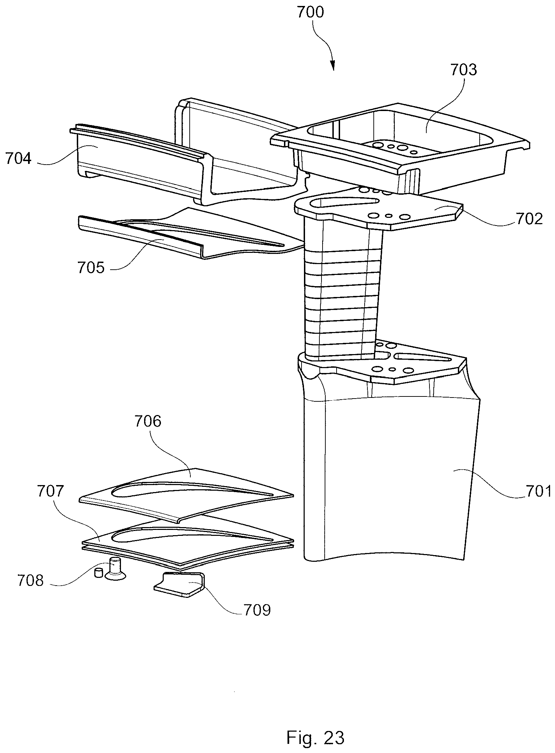

- Figure 23: shows a guide vane concept.

### Detailed description of exemplary embodiments of the invention

Figures of this description show various embodiment of single and/or multi-plies CMC panels provided for system arrangements. Fundamentally, the CMC panel can be designed with individualized fibre structure in accordance with the operational requirements. A certain percentage of the fibres may have differentiated diameters, which are intended to mainly carry the mechanical load (in the case of the larger diameters) and thermal stresses during the flow-applied operation.

Figure 4 shows various examples of panel combinations. Generally, panel means multi-plies of arranged or woven fibres tissues. Figure 4 a) shows a standard CMC panel, also called panel 1, using standard arranged and/or woven fibres tissues. Different layers in a multi-layered panel do not have necessarily the same fibre orientation or weaving architecture. The panel combination according to Figure 4 b), is putting together a standard CMC panel (made of one of multiple plies of a standard ceramic tissues) and a "cooling pattern" CMC panel (see also description under Figure 3) also called panel 2.

Fig.4c): a "cooling pattern" CMC panel placed in-between two standard CMC panels.

Fig.4d): same as Fig.4c), but with the addition of an "isolation" panel (so-called panel 3) at the bottom (in red).Further configurations of the various panels are shown in Figure 1. These are not the aim of exhaustive configurations.

Other combinations can be realised depending on the specific application. The layer-up order of the panels can also be different. The panels can be made of complex 3D geometries such as a gas turbine rotor blade/vane airfoil (see the examples under Figure 1).

Figure 2 shows the structure of an "isolation panel". For detailed description see Figure 8.

The mentioned CMC zones 20, 40 can consist of a laminate structure, such that an appropriate bond between the single intermediate layers (different tissue plies) is achieved. Furthermore, the zones can be formed by a multiple sandwich structure. "Laminate structure" means the technique of manufacturing a material in multiple layers, so that the composite material achieves improved strength, stability, sound insulation, appearance or other properties from the use of differing materials. A laminate structure is usually permanently assembled by heat, pressure, welding, or adhesives

Moreover, the mentioned ceramic felt 30 between the CMC zones 20, 40, likewise build-up of 2D/3D tissue structure with thinner fibres, serves to fix the ceramic matrix to the overall fibre substructure. The fibres of the ceramic felt can be differently woven using the same or different materials, within the ceramic felt and on each side of the panels comprises both first and second fibre materials. Any stacking-sequence of different woven fibres within the thickness of the panel arrangement is also possible.

Figure 3 shows various arrangements of cooling architecture panels consisting of at least two embodiments: Figure 3a) shows a panel using combined fibres architectures for example a standard CMC woven tissue 50 in combination with carbon fibres 60. The other Figure 3 b) shows a panel using tissues with pre-built cooling holes 70. A combination using fibres and tissues with pre-built cooling holes can be made.

Figure 5 shows a concept with pins 100, which are inserted through the various panels according to Figures 1 to 4 during the manufacturing process of a single panel or of panel combinations. The pins are positioned once the panel structure is built and are removed after the sintering step of the process. Number, size and puncture locations of the introduced pins are determined from case to case, particularly in connection with the cooling requirements of the single panel.

Figure 6 shows the mentioned panel arrangements by virtue of Figure 5, in which the pins are removed, thus the resulting channels constitute appropriate cooling holes.

Additionally, the cooling holes being actively connected to the structured cooling or chaotic running channels within the panel body are designated for convective and/or impingement and/or effusion cooling effects. Furthermore, in some specific configurations or using a specific type of pins, the introduced pins (see Figure 5, item 100) through the woven structure can be integrally or partially eliminated by using a thermal and/o chemical treatment.

One additional point to mention is the fact that the pins can be inserted through the full thickness of a single panel or of a panel combination. However, it can also be the case that the pins are inserted only partially through the thickness of the panel combination, not passing through the whole thickness.

Figure 7 shows an example of manufacturing with metallic pins 110 and inserted in the CMC tissue 120 and fixed on the underneath mould before the drying operation. Such an implementation can be made in every above identified panels 1, 2 and 3 (see Figure 5).

Figure 8 shows in an enlarged scale the same arrangement as already shown under Figure 2 and it is equivalent to the panel 3 under Figure 4 c). Of course, all other illustrated panels under Figure 4 or 5 can also be made.

Figure 8 shows the structure of an "isolation panel" comprises, as viewed from top to bottom, of a coating zone 10, a CMC zone 20 consisting of one or more plies, a centrally (intermediate) arranged ceramic felt 30, which is or not impregnated with ceramic slurry matrix system, and finally a further CMC zone 40 (see also Figure 8). Depending on the needs, a coating (zone 10) can be added by various different processes, for example thermal spraying, dipping, CVD, etc., on top of the internal or external surface of the panel.

Figures 9 a)-e) show various tissue architectures using combined fibres architectures. The first ceramic fibres 50 (white) are used in the standard CMC woven tissue. Complementary fibres 60 (black) consist of carbon fibres. The "black" fibres are "sacrificial fibres that will burn out during the sintering process leaving a negative architecture forming the cooling structure. Both fibres can be differently woven using the same or different materials. The resulting architecture having a rectangular or quasi-rectangular weaving, or an oblique or quasi-oblique, or non-rectangular angulation weaving. Furthermore, the architecture can be designated as a sinusoidal or quasi-sinusoidal interdigitated weaving. Any stacking-sequence of different woven fibres within the thickness of the panel arrangement is also possible. Figure 9 a)-e) reflects the different weaving structure.

A practical result of a manufacturing according to Figure 9 is shown in Figure 10 A and B. In particular, Figures 10 A and B show the centrally in-between disposed cooling channel structure 130, 140.

Figure 11 a) corresponds to Figure 3 b) and Figure 11 b) This is an example pf pre-built CAH in a ceramic tissue which is then integrated in the standard CMC panel forming an airfoil with precisely positioned CAHs.

In this context using a special fabric (see definition under "summery of the invention") where the cooling structure (CAHs) is directly woven in within a ceramic fabric and applying as a layer. The performing are as follows:
1) Cut a stripe or pre-defined geometry tissue from a special fabric.
2) Integrated stripe or pre-defined geometry tissue into ceramic fabric, e.g., by cutting out the corresponding geometry from the ceramic fabric.

Referring to Figures 11b) one layer with a special woven forming the cooling structure (CAHs) provided as a layer.

Figure 12 a)-c) shows an undulated structure 80, 90 of a main panel or intermediate layer, which is made of CMC. The undulated structure can play the role of "bumper" and "CTE mismatch compensator". The final aim is to combine an undulated structure made of CMC to a single or multiple panel structure obtained from various operations. The undulated structure 80, 90 is manufactured separately using the same manufacturing route as the standard CMC tissues and an appropriated mould including the drying and de-moulding steps. The structure is slipped in the internal cavity of the multiple panel structure obtained from various operations. Both structures can be glued using the same ceramic slurry used for the infiltration of the ceramic tissues, or only punctually bound in order to allow a larger lateral movement/expansion of the "undulated" structure. The binding between both structures, namely panel/undulated structure, can also be made by a different joining method, such as a ceramic glue or a brazing technique using metallised surfaces on both ceramic structures

The additional use of a heat and oxidation resistant flexible layer (Figures 12 a-c) will compensate the CTE mismatch between the ceramic (CMC and metallic IGT core section, such as between the central metallic core and the surrounding shell of rotating or stationary blading (rotor blade/guide vane). It would also comprise a shock absorbing function in case of foreign object impact and avoid a complete disintegration of damaged CMC shell or liner system. Such 3D intermediate layer structure can be made of 3D-structured metallic grid or in form of a corrugated metallic structure, exhibiting a honeycomb or any similar texture.

Figure 13 shows a flexible manufacturing concept with reinforcement inserts referring to a blade/vane airfoil, according to sub-figures a) and b), and Figure 14 shows a concept of CMC woven to join the Trailing Edge (TE) area. See the detailed description on pages 13-15 of this disclosure.

Two ceramic tissues interwoven at one extremity in order to enable a connection at, e.g., the TE, which is not only relying on gluing/brazing methods.

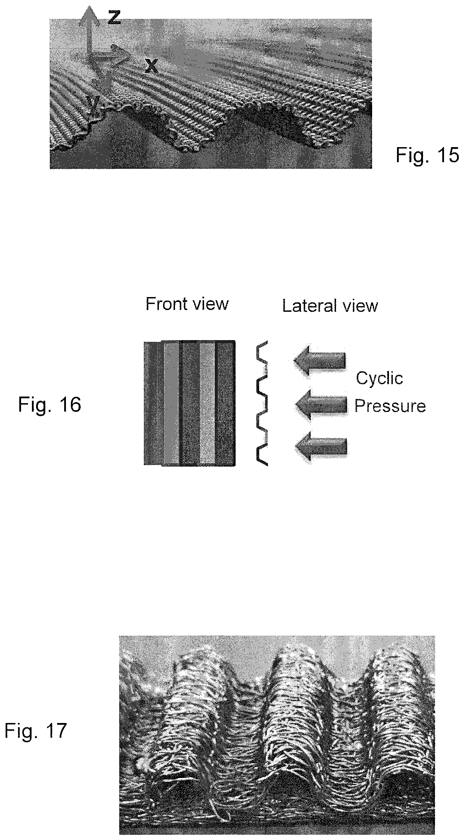

Figure 15 shows a design example using a simple spar or double metallic spar configurations.

Figure 16 shows a ceramic reinforcement insert with integrated cooling features.

Figure 17 shows an intermediate layer for CTE mismatch control between spar and CMC shell and CMC shell support and cooling control.

Figures 18-23 show various example of a metallic airfoil solid fixation, namely:
Figure 18 shows a typically guide vane, which generally has an airfoil 100, an outer platform 200 and an inner platform 300. The outer platform is arranged as a wall element for fixing the guide vane to the inner housing, also called stator, of the gas turbine and forms the outer boundary of a hot-gas duct for the working medium flowing through the turbine. For efficient routing of the flow of the working medium a guide vane row is arranged upstream of a rotor blade row, wherein the guide vanes usually are equipped with a profiled vane airfoil. The guide vane airfoil 100 extends between the vane root, on one side, and a cover plate formed integrally on the vane with respect to the other side; this cover plate or platform delimits the hot-gas duct for the working medium in the direction toward the turbine shaft in the region of the respective guide vane row. The guide vane airfoil and the guide vane root form with the cover plate a vane base body of the corresponding guide vane, which is usually, including optionally the inner platform 300, of single-piece design. A vane base body of this type can be produced, for example, by casting, forging, or if appropriate also in single-crystal form. At least one part of the vane base body, in addition to the airfoil may be manufactured on the basic by an isolation panel according to one or more of the attached claims referring to the present description.

Accordingly, each guide vane provides a radial outer platform 200, an airfoil 100 and a radial inner platform 300. The radial outer platform contains mounting hooks 201, 202 that are inserted into mounting grooves of the stator component of the first turbine stage (not shown). The inner platform 300 of the guide vane, typically, encloses a gap with the rotor liner through which a purge flow of cooling medium can be injected into the hot gas flow within the gas turbine. In the same way, a purge flow of cooling medium is injected through a gap, which is enclosed by parts of the stator component, the upstream edge of the outer platform 200 of the guide vane and the outer combustor liner, also called stator liner. Generally, downstream of the outer platform 200 a heat shield (not shown) is mounted inside of the stator component which prevents overheating of the inner faced areas of the stator component in the same way as in case of the outer platform 200.

Generally, the means for the purpose of an interchangeable connection of the guide vane elements, namely between airfoil, inner platform, outer platform and optionally flow carrier comprising reciprocal lugs or recesses based on a friction-locked bonding or permanent connection or fixing.

Figure 19 shows a cross sectional view through the guide vane, comprising an additional flow-applied outer hot gas path liner 400, also called shell module, as shown in Figure 13. A guide vane leading edge side cooling passage 100a, intermediate cooling passages 100b, 100c and guide vane trailing edge side cooling passages 100d, 100e are formed, independently, between the guide vane leading edge 400a side and the guide vane trailing edge 400b side.

The flow- applied shell module encases integrally or partially the outer contour of the based guide vane airfoil of the guide vane according to aerodynamic requirements. The partial shell structure is actively connected to the leading edge of the based airfoil of the guide vane, wherein the outer contour of the based airfoil consists of an independent flow-charged part, being actively connected to the leading edge of the airfoil of the guide vane. The flow-charged shell structure encases integrally the outer contour of the based guide vane airfoil, complying with aerodynamic final aims of the vane, or the flow-charged shell structure encases partially the outer contour of the based airfoil in the flow direction of the working medium of the gas turbine, complying with aerodynamic final aims of the guide vane. According to an additional embodiment the based guide vane airfoil comprises inside a supplementary body formed by the configuration of a spar. In place of the based guide vane airfoil can be made a spar as substructure. The shell structure may be formed by the form of an integrally or segmented body. The first shell structure comprises internally a second or intermediate non-flow-charged or partially flow-charged shell structure, complying with aerodynamic final aims of the vane. The two shell liners are adjacent or have an intermediate distance from one another. When the first flow-charged shell structure encases integrally the outer contour of the guide vane airfoil, this shell structure comprises at least two bodies forming completely or partially the outer contour of the based guide vane airfoil. The mentioned bodies, forming completely or partially the outer shell structure, are brazed or welded along their radial interface, and they have radial or quasi-radial gaps, which are filled with a seal and/or ceramic material.

The outer shell is inter-changeable, consumable, pre-fabricated, single or multi-piece with radial or circumferential patches or uses with respect to the sub-structure of the guide vane airfoil a shrinking joint.

Furthermore, the intermediate shell or shells are parts of an optional assembly. The mentioned shell(s) are inter-changeable, pre-fabricated, arranged as single or multi multi-piece with radial or circumferential patches, uncooled or cooled (convective, film, effusion, impingement cooling), fabricated as compensator for different thermal expansion of outer shell and spar, and with a cooling shirt with respect to different cooling configurations for optimization operational requirements. The spar as sub-structure of the guide vane airfoil or of the shell assembly is interchangeable, p re-fab heated or various manufactured, single or multi-piece, uncooled or cooled using convective, film, effusion, impingement cooling, having a web structure for cooling or stiffness improvement.

Figure 20 shows an assembled guide vane in the region of the outer platform, wherein the assembly between airfoil 100 and outer platform 200 resp. airfoil carrier 220 is made by a brazing and/or frictional connection 210. This joint may be mechanically loaded, no absolutely tightness is required. Additionally, the assembled guide vane comprises the following means: The outer platform 200 has an airfoil carrier 220, forming the outer hot gas liner, may be casted, machined or forged. The airfoil carrier may comprise internal local web structure for cooling or stiffness improvement. Material selection and properties are optimized to the individual application. The airfoil carrier 220 comprises flexible cooling configurations provided to functional requirements of the gas turbine with respect to base-load, peak-mode or partial load. Another joint 222 affects the amalgamation between the airfoil 100 and the outer platform 200 on the different levels in radial direction of the guide vane, beyond the above-mentioned assembly between airfoil 100 and outer platform 200, made by a brazing and/or frictional connection and/or mechanical loaded 210. The joint 222 is not constructed to absorb mechanical load, but as a sealing connection. A further joint 225 affects the amalgamation between the outer platform 200 and airfoil carrier 220 on the side of the stator. This joint 225 is not constructed to absorb mechanical load, but as a sealing connection. With respect to the hot gases, the flow-applied underside of the outer platform 200 comprises protective liners 221, 223 on the different levels in radial direction of the guide vane. The mentioned liners 221, 223 are made by a brazing and/or frictional connection and/or mechanical loaded 224. The same measures are applied with respect to the inner platform 300 (not specifically shown).

Normally, the platforms 200, 300 and the guide vane airfoil are no consumable parts. In contrast, the mentioned sealing and liners are consumable parts. The airfoil carrier may be consumable, depending on costs. The airfoil carrier 220 is cast, machined or forged comprising additionally additive features with internal local web structure for cooling or stiffness improvements. Furthermore, the airfoil carrier comprises flexible cooling configurations for adjustment to operational requirements, like base-load, peak-mode, partial load of the gas turbine.

Figure 21 shows an assembled guide vane in the region of the outer platform, wherein the assembly between airfoil 100 and outer platform 200 resp. airfoil carrier 220 is made by a ceramic bush 230. This joint 231 may be mechanically loaded, no absolutely tightness is required. The remaining structure of the assembly corresponds essentially to the arrangement, as seen in Figure 4.

The outer platform 200 is cast, forged or manufactured in metal sheet or plate. The outer platform is consumable in relation to predetermined cycles, and frequently replaced at specified maintenance periods, and may be mechanically decoupled from the guide vane airfoil, wherein the outer platform may be supplementary mechanically connected to the airfoil carrier, using force closure elements, namely bolts. The outer platform may be coated with CMC or ceramic materials or may be manufactured by an isolation panel according to the attached claims.

Figure 22 shows an assembled guide vane in the region of the inner platform 300, wherein the assembly between airfoil 100 and inner platform 300 is made by a ceramic bush 240. The joint 241 may be mechanically loaded, no absolute tightness is required. The remaining structure of the assembly corresponds essentially to the arrangement, as seen in Figure 17.

The inner platform 300 is cast, forged or manufactured in metal sheet or plate. The outer platform is consumable, is replaced at specified maintenance periods, and may be mechanically decoupled from the guide vane airfoil, wherein the inner platform may be supplementary mechanically connected to the airfoil carrier, using force closure elements, namely bolts. The inner platform may be coated with CMC or ceramic materials or may be manufactured by an isolation panel according to the attached claims.

Figure 23 shows a typical arrangement of the guide vane with a metallic shell 700. The elements shown in Figure 20 are easily understood by a person skilled in the art, namely: 701 metallic shell; 702 spar; 703 airfoil carrier; 704 outer platform carrier; 705 outer platform hot gas liner; 706 inner platform hot gas liner; 707 inner platform carrier; 708 bolt and pin; 709 patch. The technical aspects of the elements result from the preceding figures and the associated description. The inner platform comprises a brazed/welding patch. The hot gas liner and hot gas carrier compose a brazed structure. The outer platform includes an impingement cooling. The outer platform comprises a brazed/welding structure. The spar comprises a sealing structure with respect to the airfoil. The outer platform includes securing/and rotating elements.

## Claims

1. Method of manufacturing of a structured cooling panel for applying on a component, which is manufactured by the following operations:
a) Cutting of desized 2D ceramic tissues into tissues having a size and shape;
b) Slurry infiltration in the tissues by at least one knife blade coating method;
c) Laminating the tissues in a multi-layer panel, with slurry impregnation after each layer, wherein the tissue has combined fibres, being a combined fibre architecture ceramic tissue comprising a ceramic tissue in combination with sacrificial carbon fibres, and/or pre-build cooling holes;
d) Drying;
e) De-moulding;
f) Sintering the multi-layer panel to obtain a multiple panel structure, wherein part of the combined fibres burns out during the sintering process leaving a negative architecture forming the cooling structure and/or the pre-build cooling holes define the cooling structure;
g) Finishing, using of i) post-machine, and/or ii) surface smoothening/rework, and/or iii) coating application, and/or other procedures;
the method further comprising a step of combining a supplemental panel structure made of CMC to the multiple panel structure obtained from operations a) to f).

2. The method according to claim 1, **characterised by** comprising a pin application with a plurality of pins in order to generate straight cooling paths referring to cooling air holes, through a part of the thickness or through the full thickness of the panel structure, wherein the pins are: i) metallic pins with a ceramic layer on top to avoid attachment of matrix to the pin and too strong oxidation of the pin during sintering; or ii) permanent ceramic pins, that can be easily removed after sintering; or iii) pin that will be eliminated during the sintering process via a heat treatment.

3. The method according to claim 2, **characterised in that** the eliminated pins are carbon pins so as to be eliminated during the sintering process via the heat treatment.

4. The method according to one of the claims 2 or 3, **characterised in that** the pins are applied by sliding them through a part of thickness or through the panel structure, wherein in order to facilitate the positioning of the pins, a mould underneath can be provided with positioning hole in which the pins are fit into with the appropriated position and angle.

5. The method according to one of the claims 2 to 4, **characterised in that** the pins are inserted in-between the tissue fibre bundles in order to avoid any damages of the ceramic fibres during the processing and later removal of the pins.

6. The method according to claim 1, **characterised in that** the step of combining the supplemental panel structure made of CMC to the multiple panel structure obtained from operations a) to f) comprises one or more of the following manufacturing steps: i) the supplemental panel structure is manufactured separately using the same manufacturing route as the ceramic tissues and an appropriated mould including the drying and de-moulding steps; ii) the supplemental panel structure is slipped in an internal cavity of the multiple panel structure obtained from operations a) to f); iii) both structures are glued using the same ceramic slurry used for the infiltration of the ceramic tissues, or only punctually bound in order to allow a larger lateral movement/expansion of the supplemental structure; iv) the binding between both structures is made by a different joining method, such as a ceramic glue or a brazing technique using metallised surfaces on both ceramic structures.

7. The method according to claim 6, **characterised in that** a subsequent drying operation is made, when step iii) is carried out.

8. The method according to one of the claims 6 or 7, **characterised in that** the supplemental panel structure consist of an undulated configuration.

9. The method according to any of claims 1 to 8, **characterised in that** laminating comprises laminating on top of the multi-layer panel one to n-layers of ceramic felt, with a slurry infiltration in the felt.

10. The method of claim 9, **characterized in that** infiltration of the felt comprises only outer surface infiltration of the felt in order to bind it to the multi-layer panel, or fully impregnation by knife blade coating, after each single layer.

## Patentansprüche

1. Verfahren zur Herstellung einer strukturierten Kühlplatte zum Aufbringen auf ein Bauteil, die durch die folgenden Vorgänge hergestellt wird:
a) Schneiden von entschlichteten 2D-Keramikgeweben zu Geweben mit einer bestimmten Größe und Form;
b) Infiltrieren von Schlicker in die Gewebe durch wenigstens ein Messerklingenbeschichtungsverfahren;
c) Laminieren der Gewebe zu einer mehrschichtigen Platte mit Schlickerimprägnierung nach jeder Schicht, wobei das Gewebe kombinierte Fasern, die ein keramisches Gewebe mit kombinierter Faserarchitektur sind, das ein keramisches Gewebe in Kombination mit Opfer-Kohlenstofffasern umfasst, und/oder im Voraus gebildete Kühllöcher aufweist;
d) Trocknen;
e) Entformen;
f) Sintern der mehrschichtigen Platte, um eine Mehrfachplattenstruktur zu erhalten, wobei ein Teil der kombinierten Fasern während des Sinterprozesses ausbrennt und eine Negativ-Architektur hinterlässt, die die Kühlstruktur bildet, und/oder die im Voraus gebildeten Kühllöcher die Kühlstruktur definieren;
g) Endbearbeitung unter Verwendung von i) Nachbearbeitung und/oder ii) Glättung/Überarbeitung der Oberfläche und/oder iii) Aufbringen einer Beschichtung und/oder anderer Verfahren;
wobei das Verfahren ferner einen Schritt umfasst, bei dem eine zusätzliche Plattenstruktur aus CMC mit der aus den Vorgängen a) bis f) erhaltenen Mehrfachplattenstruktur kombiniert wird.

2. Verfahren nach Anspruch 1, **dadurch gekennzeichnet, dass** es eine Stiftanwendung mit mehreren Stiften umfasst, um geradlinige Kühlpfade, die Kühlluftlöchern zugeordnet sind, durch einen Teil der Dicke oder durch die gesamte Dicke der Plattenstruktur zu erzeugen, wobei die Stifte sind: i) metallische Stifte mit einer Keramikschicht auf der Oberseite, um eine Anhaftung der Matrix an dem Stift und eine zu starke Oxidation des Stifts während des Sinterns zu vermeiden; oder ii) permanente Keramikstifte, die nach dem Sintern leicht entfernt werden können; oder iii) Stifte, die während des Sinterns durch eine Wärmebehandlung eliminiert werden.

3. Verfahren nach Anspruch 2, **dadurch gekennzeichnet, dass** die eliminierten Stifte Kohlenstoffstifte sind, die während des Sinterprozesses durch die Wärmebehandlung eliminiert werden.

4. Verfahren nach einem der Ansprüche 2 oder 3, **dadurch gekennzeichnet, dass** die Stifte angewendet werden, indem sie durch einem Teil der Dicke oder durch die Plattenstruktur geschoben werden, wobei zur Erleichterung der Positionierung der Stifte eine darunter liegende Form mit einem Positionierungsloch versehen sein kann, in das die Stifte mit der geeigneten Position und dem geeigneten Winkel eingeführt werden.

5. Verfahren nach einem der Ansprüche 2 bis 4, **dadurch gekennzeichnet, dass** die Stifte zwischen die Gewebefaserbündel eingeführt werden, um jegliche Beschädigungen der Keramikfasern während der Verarbeitung und der späteren Entfernung der Stifte zu vermeiden.

6. Verfahren nach Anspruch 1, **dadurch gekennzeichnet, dass** der Schritt des Kombinierens der zusätzlichen Plattenstruktur aus CMC mit der aus den Vorgängen a) bis f) erhaltenen Mehrfachplattenstruktur einen oder mehrere der folgenden Herstellungsschritte umfasst: i) die zusätzliche Plattenstruktur wird separat hergestellt, wobei derselbe Herstellungsweg wie bei den keramischen Geweben und eine geeignete Form einschließlich der Schritte des Trocknens und Entformens verwendet wird; ii) die zusätzliche Plattenstruktur wird in einen inneren Hohlraum der aus den Vorgängen a) bis f) erhaltenen Mehrfachplattenstruktur eingeschoben; iii) beide Strukturen werden unter Verwendung desselben keramischen Schlicks verklebt, der für die Infiltration der keramischen Gewebe verwendet wird, oder nur punktuell verbunden, um eine größere laterale Bewegung/Ausdehnung der zusätzlichen Struktur zu ermöglichen; iv) die Verbindung zwischen beiden Strukturen erfolgt durch ein anderes Verbindungsverfahren, wie beispielsweise einen keramischen Klebstoff oder eine Löttechnik unter Verwendung metallisierter Oberflächen auf beiden keramischen Strukturen.

7. Verfahren nach Anspruch 6, **dadurch gekennzeichnet, dass** ein anschließender Trocknungsvorgang durchgeführt wird, wenn Schritt iii) ausgeführt ist.

8. Verfahren nach einem der Ansprüche 6 oder 7, **dadurch gekennzeichnet, dass** die zusätzliche Plattenstruktur aus einer wellenförmigen Konfiguration besteht.

9. Verfahren nach einem der Ansprüche 1 bis 8, **dadurch gekennzeichnet, dass** das Laminieren ein Laminieren von einer bis n Lagen eines keramischen Filzes auf die Oberseite der mehrschichtigen Platte umfasst, wobei der Filz mit einem Schlick infiltriert wird.

10. Verfahren nach Anspruch 9, **dadurch gekennzeichnet, dass** die Infiltration des Filzes nur eine Infiltration der äußeren Oberfläche des Filzes umfasst, um ihn mit der mehrschichtigen Platte zu verbinden, oder eine vollständige Imprägnierung mittels Messerklingenbeschichtung nach jeder einzelnen Schicht.

## Revendications

1. Procédé de fabrication d'un panneau de refroidissement structuré à appliquer sur un composant, qui est fabriqué par les opérations suivantes :
a) La découpe de tissus de céramique 2D désencollés en tissus ayant une taille et une forme ;
b) l'infiltration de suspension dans les tissus à l'aide d'au moins un procédé de couchage à la lame de couteau ;
c) la stratification des tissus en un panneau multicouche, avec une imprégnation de suspension après chaque couche, dans lequel le tissu a des fibres combinées, à savoir un tissu de céramique à architecture de fibres combinées comprenant un tissu de céramique en combinaison avec des fibres de carbone sacrificielles, et/ou des trous de refroidissement pré-construits ;
d) le séchage ;
e) le démoulage ;
f) le frittage du panneau multicouche pour obtenir une structure à panneaux multiples,
dans lequel une partie des fibres combinées se calcinent pendant le processus de frittage en laissant une architecture négative, formant la structure de refroidissement et/ou les trous de refroidissement pré-construits, définir la structure de refroidissement ;
g) la finition, par i) post-usinage, et/ou ii) lissage/retraitement de la surface, et/ou iii) application d'un revêtement, et/ou autres procédures ;
le procédé comprenant en outre une étape consistant à combiner une structure de panneau supplémentaire faite de CMC à la structure à panneaux multiples obtenue à partir des opérations a) à f).

2. Procédé selon la revendication 1, **caractérisé en ce qu'**il comprend une application de broches avec une pluralité de broches afin de générer des chemins de refroidissement droits associés à des trous d'air de refroidissement, à travers une partie de l'épaisseur ou à travers l'épaisseur totale de la structure de panneau, dans lequel les broches sont : i) des broches métalliques surmontées d'une couche de céramique pour éviter la fixation de la matrice à la broche et une oxydation trop forte de la broche pendant le frittage ; ou ii) des broches en céramique permanentes, qui peuvent être facilement retirées après le frittage ; ou iii) des broches qui seront éliminées pendant le processus de frittage par le biais d'un traitement thermique.

3. Procédé selon la revendication 2, **caractérisé en ce que** les broches éliminées sont des broches de carbone afin qu'elles soient éliminées pendant le processus de frittage par le biais du traitement thermique.

4. Procédé selon l'une des revendications 2 et 3, **caractérisé en ce que** les broches sont appliquées en les faisant glisser à travers une partie de l'épaisseur ou à travers la structure de panneau, dans lequel, afin de faciliter le positionnement des broches, un moule situé en dessous peut être pourvu d'un trou de positionnement dans lequel les broches sont insérées selon la position et l'angle appropriés.

5. Procédé selon l'une des revendications 2 à 4, **caractérisé en ce que** les broches sont insérées entre les faisceaux de fibres de tissu afin d'éviter tout endommagement des fibres céramiques pendant le traitement et le retrait ultérieur des broches.

6. Procédé selon la revendication 1, **caractérisé en ce que** l'étape de combinaison de la structure de panneau supplémentaire faite de CMC à la structure à panneaux multiples obtenue à partir des opérations a) à f) comprend une ou plusieurs des étapes de fabrication suivantes : i) la structure de panneau supplémentaire est fabriquée séparément à l'aide de la même méthode de fabrication que les tissus de céramique et un moule approprié comprenant les étapes de séchage et de démoulage ; ii) la structure de panneau supplémentaire est glissée dans une cavité interne de la structure à panneaux multiples obtenue à partir des opérations a) à f) ; iii) les deux structures sont collées en utilisant la même suspension de céramique que celle utilisée pour l'infiltration des tissus de céramique, ou seulement ponctuellement afin de permettre un mouvement/une expansion latérale plus importante de la structure supplémentaire ; iv) la liaison entre les deux structures est réalisée par une méthode d'assemblage différente, telle qu'une colle céramique ou une technique de brasage utilisant des surfaces métallisées sur les deux structures céramiques.

7. Procédé selon la revendication 6, **caractérisé en ce qu'**une opération de séchage ultérieure est effectuée, lorsque l'étape iii) est réalisée.

8. Procédé selon l'une des revendications 6 et 7, **caractérisé en ce que** la structure de panneau supplémentaire consiste en une configuration ondulée.

9. Procédé selon l'une quelconque des revendications 1 à 8, **caractérisé en ce que** la stratification comprend la stratification au-dessus du panneau multicouche d'une à n couches de feutre de céramique, avec une infiltration de suspension dans le feutre.

10. Procédé selon la revendication 9, **caractérisé en ce que** l'infiltration du feutre comprend uniquement l'infiltration de la surface extérieure du feutre afin de le lier au panneau multicouche, ou l'imprégnation complète par couchage à la lame de couteau, après chaque couche unique.
